# EUROPEAN PATENT APPLICATION

(11) **EP 1 672 773 A2**
(43) Date of publication of application: **21.06.2006**
(21) Application number: 05111987.3
(22) Date of filing: 12.12.2005
(51) Int. Cl.: H02K 41/03

(54) **Linear motor**

(30) Priority: 14.12.2004 IT UD20040231
(71) Applicant: Baccini, Gisulfo, I-31030 Mignagola di Carbonera (TV) (IT)
(72) Inventor: Baccini, Gisulfo, I-31030 Mignagola di Carbonera (TV) (IT)
(74) Representative: Petraz, Davide Luigi

(57) **Abstract**

Linear motor (10) comprising a rotor (13), having a plurality of teeth (21, 22), wherein each pair of adjacent teeth (21, 22) defines a corresponding compartment (23) inside which at least a relative electric coil (24) is housed. The linear motor (10) also comprises a support (18) on which a plurality of permanent magnets (19) are assembled, disposed in use facing the electric coils (24). The rotor is defined by one or more modular elements (14) each of which comprises two external teeth (21) and one or more intermediate teeth (22). Each external tooth (21) has a thickness (s') substantially equal to about half the thickness (s) of each intermediate tooth (22), so that, when two external teeth (21), belonging to two respective modular elements (14), are put adjacent, the resulting tooth has a thickness substantially equal to the thickness (s) of each of the intermediate teeth (22).

## Description

### FIELD OF THE INVENTION

The present invention concerns a synchronous linear motor with permanent magnet excitation (brushless). To be more exact, the linear motor according to the present invention is of the type comprising a rotor or armature, having a plurality of compartments inside which coils or windings of electric conductors are inserted, and at least a support or plate on which a plurality of permanent magnets are assembled, disposed facing each other on at least one side of the coils.

### BACKGROUND OF THE INVENTION

A linear motor is known, comprising a rotor having a plurality of compartments inside which coils or windings of electric conductors are inserted, through which a determinate electric current passes, and at least a metal support on which a plurality of permanent magnets are assembled, aligned with each other, disposed with reciprocally alternate poles, and facing on at least one side said coils.

The rotor is normally made with a plurality of laminations, which are obtained by molding, adjacent to each other along their length and welded together.

The width of the rotor is therefore defined by the thickness of each lamination and by the number of adjacent laminations, while the length is defined by the length of the laminations themselves.

It is known that some characteristics of the linear motor, such as the electromotor force produced, are correlated to the size of the motor itself, of its rotor in particular, and hence of its laminations.

During the production step of the motor, the laminations to be used are produced by means of a mold, which imposes the length of the laminations, and hence the length of the rotor.

The width of the rotor, on the contrary, can be varied according to the number of laminations that are put adjacent so as to form the rotor.

The state of the art has the disadvantage that, to obtain motors with characteristics that are variable in a range of values, it is necessary to have available a large number of molds for laminations, since every length of the motor imposes a different mold and the molds available may not satisfy the technical requirements of the motor to be produced, so that even the production of new molds, sized for the purpose, may be required.

One purpose of the present invention is to achieve a linear motor with characteristics that are easily variable, during the design step, advantageously using a single mold for the laminations or a limited number of molds.

Another purpose of the present invention is to achieve a linear motor having a high capacity of thermal dissipation of the heat produced by the electric current passing in the coils.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a linear motor according to the present invention comprises a rotor having a plurality of teeth, wherein every pair of adjacent teeth defines a corresponding compartment inside which at least a relative electric coil is housed.

The linear motor according to the present invention also comprises a support or plate, able to cooperate with one side of the rotor, and on which a plurality of permanent magnets are assembled, disposed, during use, facing the electric coils.

According to a characteristic of the present invention, the rotor is defined by one or more modular elements, or modules, each of which comprises two external teeth, or end teeth, and one or more intermediate teeth.

According to another characteristic of the present invention, each of the external teeth also has a thickness "s'" substantially equal to about half the thickness "s" of each of the intermediate teeth; in this way, when two external teeth belonging to two respective modular elements are put adjacent, the resulting tooth has a thickness "2s'" substantially equal to the thickness "s" of each intermediate tooth, so that the magnetic symmetry is maintained irrespective of the number of modules which are put adjacent.

Each modular element, in correspondence with the external teeth, has two lead walls substantially parallel with each other, and two lateral walls substantially perpendicular to the lead walls.

During the step of reciprocal coupling of one or more modular elements, the respective lead walls are put in contact with each other, and/or the respective lateral walls are put in contact with each other.

Thanks to the modular characteristic of the rotor, the linear motor according to the present invention has the advantage that it can be made starting from a single pack of laminations, advantageously of a limited length, to obtain substantially all the sizes and consequent characteristics, entailing a low cost amortization of the single mold required to make the laminations.

Another advantage is that between two adjacent modular elements a discontinuous surface is achieved, through which the flow of parasite currents is almost nil, or substantially nil.

According to another characteristic of the present invention, each compartment is defined by two walls that are divergent with respect to each other, that is, open, towards the support for the magnets, with an angle comprised between about 0.1° and about 4°, advantageously between about 0.5° and about 1.5°.

Thanks to this further characteristic of the invention, the operation to insert the electric coils inside the relative compartment is facilitated, since the aperture for introducing the coils is widened.

Moreover, thanks to the fact that the compartment progressively narrows as it goes towards the bottom, the electric coils can be pressed against the bottom, making cementation no longer necessary, because the coils are clamped therein through interference.

Another advantage obtained is that, with respect to the state of the art, the contact surface between the coils and laminations increases, consequently increasing the thermal dissipation.

According to one embodiment of the invention, each of the external teeth, or end teeth, has a height "h'" less than the height "h" of the intermediate teeth. Advantageously, the height "h'" is comprised at least between about 85% and about 95% of the height "h", allowing to reduce the so-called end force, which is an unwanted force.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a longitudinal section of a linear motor according to the present invention;
- fig. 2 is a plane view of the linear motor in fig. 1 partly sectioned along the section line from II to II;
- fig. 3 is a lateral section of a detail of the linear motor along the section line from III to III in fig. 2;
- fig. 4 is a longitudinal section of a variant of the linear motor in fig. 1;
- fig. 5 is a view of a detail of the linear motor in fig. 1;
- fig. 6 is a view of a variant of fig. 5;
- fig. 7 is a view of a variant of fig. 5;
- fig. 8 is a view of a variant of fig. 5;
- fig. 9 is a lateral section of a detail of fig. 1 in a first constructional step;
- fig. 10 is a lateral section of the detail in fig. 9 in a second constructional step.

### DETAILED DESCRIPTION OF A PREFERENTIAL FORM OF EMBODIMENT

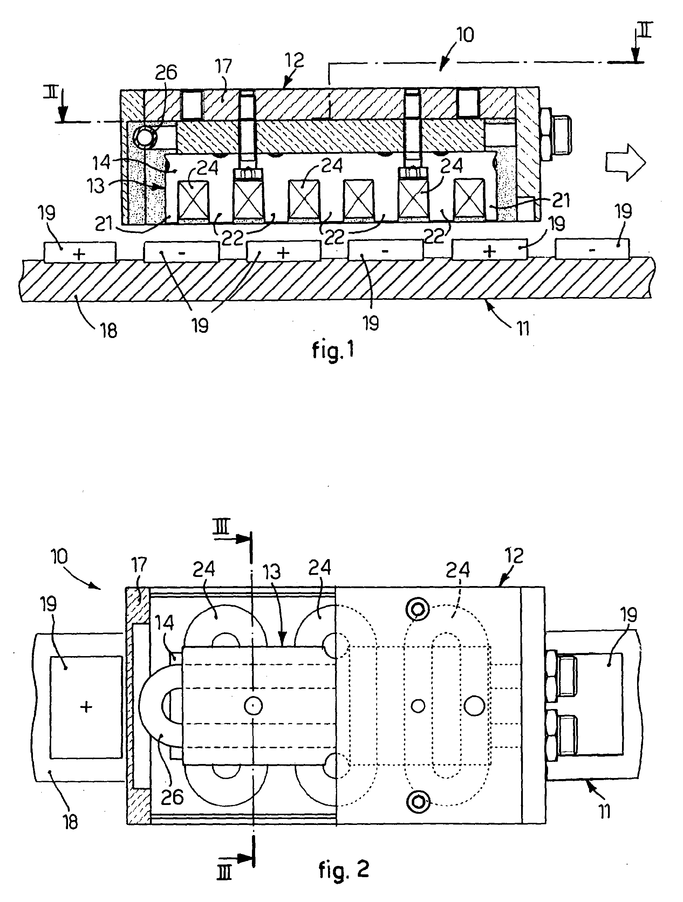

With reference to fig. 1, a linear motor 10 according to the present invention comprises a first part 11 and a second part 12, which in the case shown here constitute respectively the fixed part and the mobile part of the linear motor 10.

The first part 11, or fixed part, defines an inductor and comprises a support 18 (figs. 1 and 2), for example made of ferromagnetic material, on which a plurality of permanent magnets 19 are assembled, substantially equidistant and with reciprocally alternating poles.

The second part 12, or mobile part, comprises a rotor 13, or armature (figs. 1, 2 and 3), on which a plurality of teeth 21, 22 are made, in the case shown here, seven.

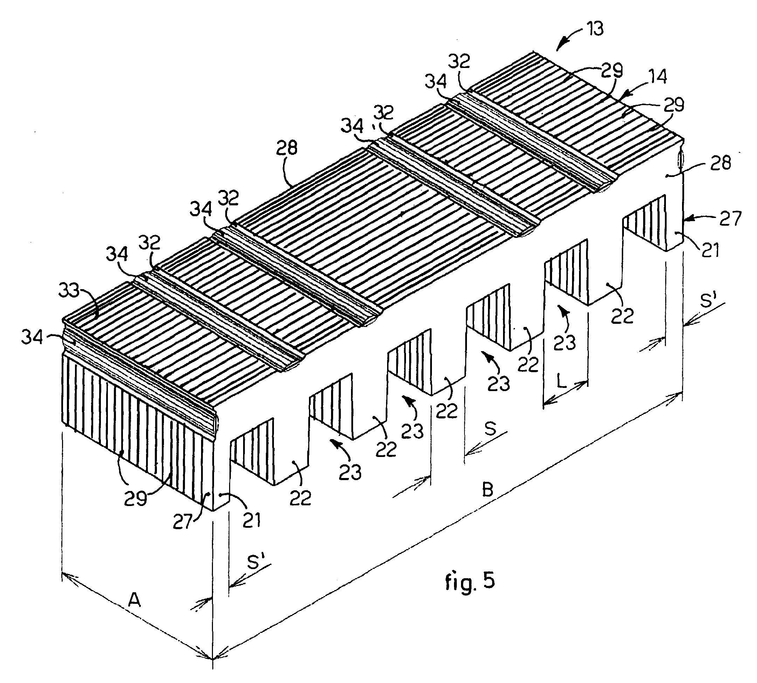

The rotor 13, in this case, is defined by a module 14 (fig. 5) having a width A equal to about 153 cm, a length B equal to about 232 cm and a height h equal to about 26.25 cm.

Two or more modules 14 can be put adjacent so as to form a rotor 13 having a desired length according to the design characteristics, particularly of the electromotor force to be produced.

Each module 14 comprises two external teeth 21 and five intermediate teeth 22; each of the external teeth 21 has a thickness s' equal to about half the thickness s of each of the intermediate teeth 22. In the case shown here s is equal to about 9 cm and s' to about 4.5 cm.

The plurality of teeth 21, 22 define a mating plurality of compartments 23, also called cavities or throats, inside which electric coils 24 are housed, in the case shown here, three.

The electric coils 24 are substantially annular in shape and are made with an electric conductor wound continuously and connected to an electric generator not shown here, of a known type.

In the case shown here, the ratio between the width L of a compartment 23, with L equal to about 12 cm, and the tooth pitch is equal to about 0.57, where the tooth pitch is defined by the sum of the width L of a compartment 23 and the thickness s of the adjacent intermediate tooth 22.

The second part 12 (figs. 1, 2 and 3) also comprises a structure 17, made for example of metal, inside which the modules 14 are contained.

The rotor 13 is disposed in contact with a pipe 26 in which a thermal carrier fluid is made to flow, for example water, able to absorb the heat generated by the electric current passing in the electric coils 24.

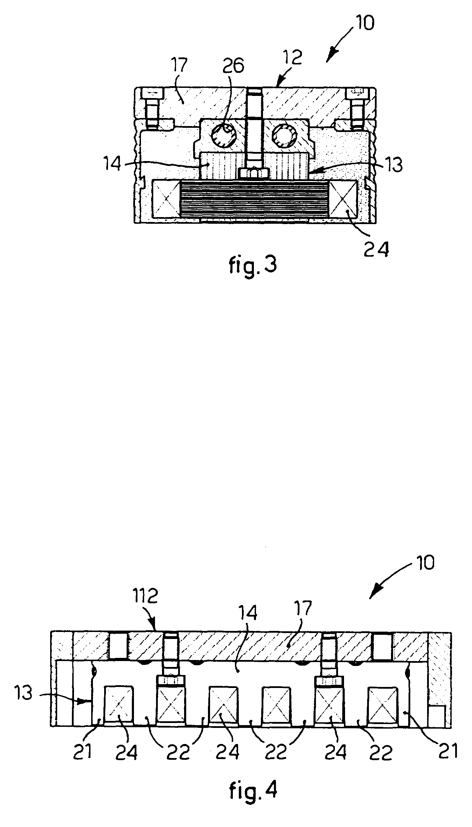

Fig. 4 shows a variant of the linear motor 10, wherein the second part, indicated by the reference number 112, does not have the pipe 26 and the rotor 13 is disposed in contact directly with the inside of the structure 17.

The first part 11 and the second part 12 (figs. 1 and 2) are reciprocally positioned so that the electric coils 24 and the teeth 21, 22 are facing the permanent magnets 19 which, in the case shown here, have four poles.

Each module 14, in correspondence with the external teeth 21, has two lead walls 27 (fig. 5), parallel to each other, and two lateral walls 28 perpendicular to the lead walls 27.

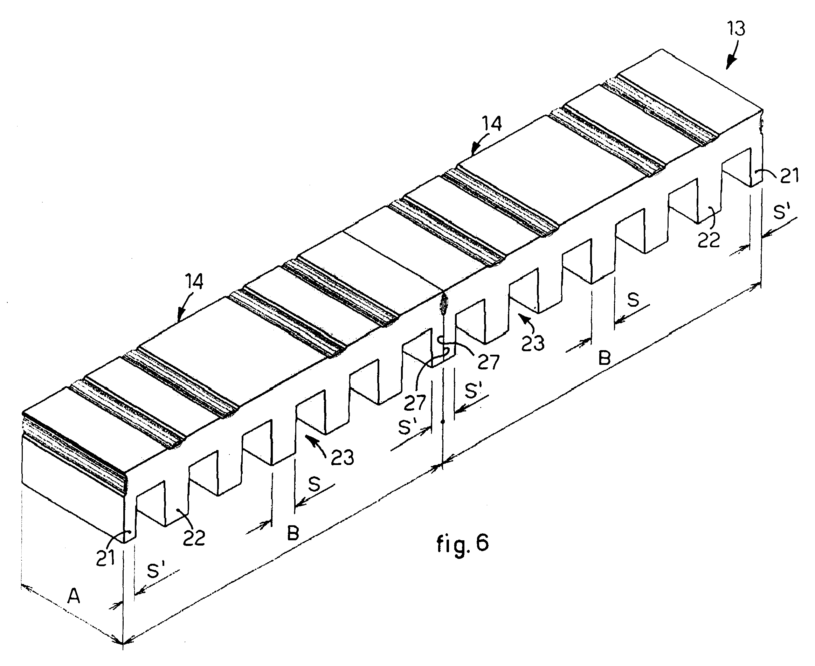

A first module 14 can be put adjacent to a second module 14, as shown in fig. 6, disposing the respective lead walls 27 in contact with each other, thus obtaining a rotor 13 with a width A and a length equal to 2B.

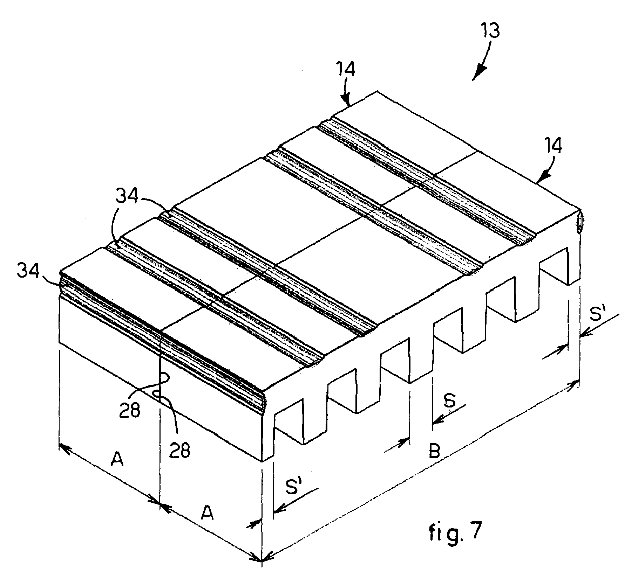

According to another embodiment shown in fig. 7, a first module 14 can be put adjacent to a second module 14, disposing the respective lateral walls 28 in contact with each other, thus obtaining a rotor 13 with a width equal to 2A and a length B.

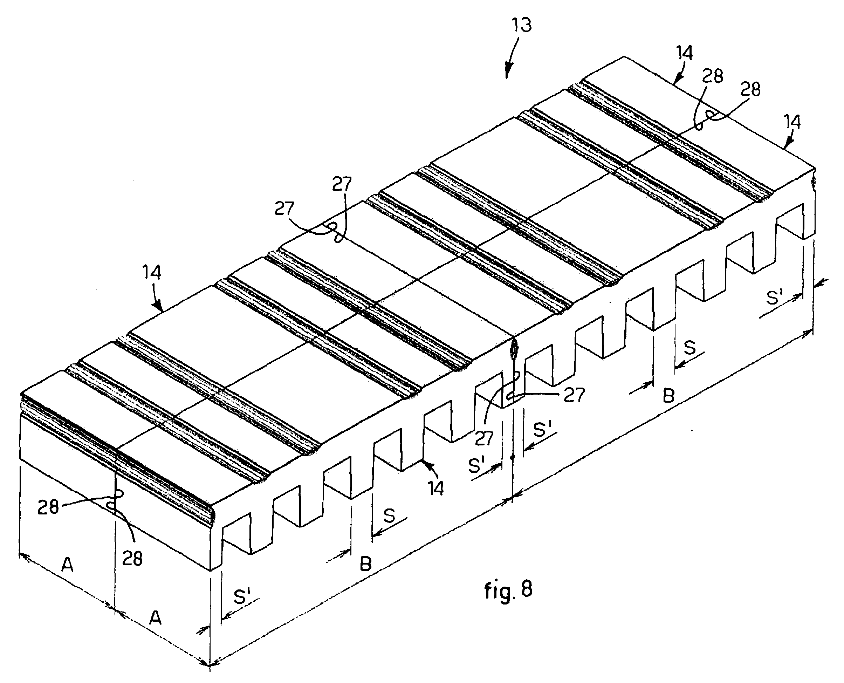

With reference to fig. 8, it is provided to put four modules 14 adjacent to each other, disposing the respective lead walls 27 and the respective lateral walls 28 in contact with each other, thus obtaining a rotor 13 with a width equal to 2A and a length equal to 2B.

Even if it is not shown, it is clear that the number of modules 14 that can be put adjacent to each other can be other than two and four respectively, thus obtaining a rotor 13 with a width equal to a desired multiple of A and/or a length equal to a desired multiple of B.

The two external teeth 21 of two respective adjacent modules 14 have a double overall thickness, 2s', therefore equal to about that of an intermediate tooth 22. This guarantees that the magnetic symmetry is maintained irrespective of the number of modules 14 put adjacent.

The modularity of the rotor 13 advantageously allows to obtain a modularity of the force produced by the linear motor 10. In this way it is possible to put adjacent a determinate number of modules 14 according to the electromotor force that the linear motor 10 has to produce.

The modularity of the rotor 13 also allows to reduce the parasite currents circulating in the linear motor 10, because between two adjacent modules 14 a discontinuous surface is achieved, through which the flow of parasite currents is practically nil.

Moreover, each module 14 is made by means of laminations 29 (fig. 5), with a number comprised for example between 50 and 70, disposed one adjacent to the other and having hollows 32 made on their upper edge which defines the upper wall 33 of the module 14, and on their lead edges which define the lead walls 27 of the module 14. In the case shown here, four hollows 32 are made on the upper edge and one on every lateral edge. The laminations 29 are attached to each other by means of a weld 34, which is made on the hollows 32.

Thanks to this modularity, it is therefore sufficient to have substantially a single pack of laminations 29 available for all the sizes of linear motors 10, allowing a low cost of amortization for the molds of the laminations 29.

Moreover, no resin mold is necessary and a single extrusion is sufficient for all the sizes of linear motors 10.

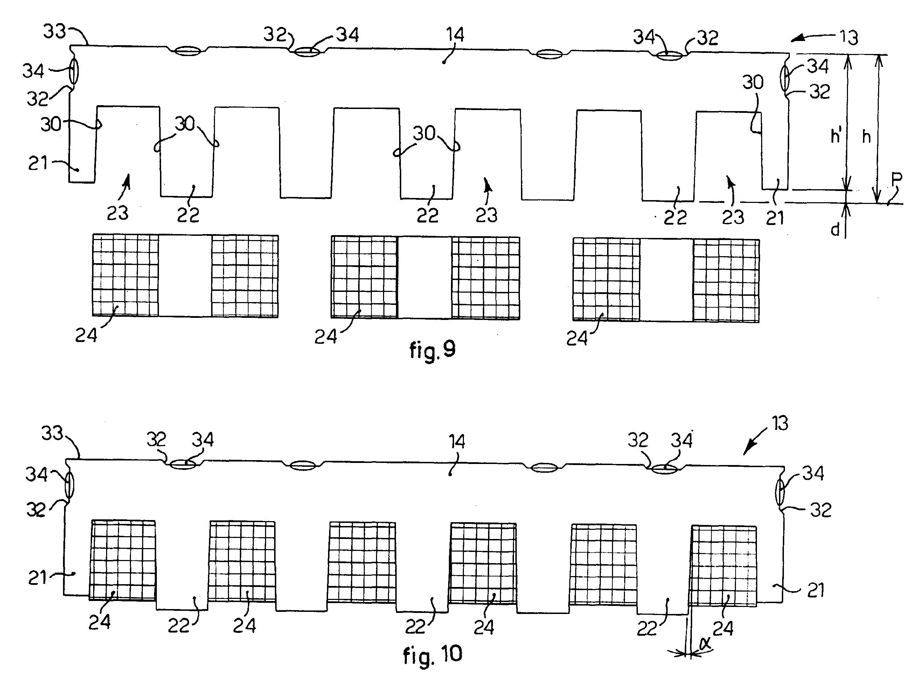

According to one embodiment, each compartment 23 (figs. 9 and 10) is defined by two walls 30 which diverge towards the first part 11, each one by an angle α comprised between about 0.5° and about 1.5°. Advantageously the angle α is equal to about 1°.

During the assembly steps of the linear motor 10, it is provided to insert the electric coils 24 inside the respective compartments 23 which, thanks to the divergence of the walls 30, is considerably facilitated.

Moreover, it is possible to press the electric coils 24 inside the respective compartments 23 so as to keep them clamped therein due to the interference and taper, in order to eliminate the cementing operation which would otherwise be necessary.

Another extremely important advantage is that, thanks to the divergence of the walls 30, the contact surface between the electric coils 24 and the laminations 29 increases, consequently increasing the thermal dissipation.

According to one embodiment of the linear motor 10, each of the external teeth 21 has a height h' less than the height h of each intermediate tooth 22 by a quantity d equal to about 1.5 cm.

Thanks to this characteristic, the external tooth 21 of the terminal module 14 approximates the behavior of a variable air gap having an inclination more or less accentuated with respect to the plane P passing through the end of the intermediate teeth 22, so as to compensate the so-called end force which occurs in the terminal external teeth of linear motors.

The fact that the height of two adjacent external teeth 21 of two respective adjacent modules 14 is less than that of the intermediate teeth 22 does not cause any disadvantage, except for an extremely limited decrease in the overall performance of the linear motor 10.

The possibility is also provided to add, in correspondence with the external tooth 21 of the terminal module 14, a lead tooth, not shown here, attached to said external tooth 21 and to the lead wall 27, having a thickness equivalent to that of the intermediate teeth 22, so as to reduce reluctance.

Advantageously, the lead tooth is inclined so as to reduce the end force.

It is clear that modifications and/or additions of parts may be made to the linear motor 10 as described heretofore, without departing from the field and scope of the present invention.

It is provided to achieve the first part 11 movable and the second part fixed, for example for all the applications in which the length of required travel of the linear motor 10 is very short.

It is also clear that, although the present invention has been described with reference to some specific examples, a person of skill in the art shall certainly be able to achieve many other equivalent forms of linear motors, having the characteristics as set forth in the claims and hence all coming within the field of protection defined thereby.

## Claims

1. Linear motor comprising a rotor (13), having a plurality of teeth (21, 22), each pair of adjacent teeth (21, 22) defining a corresponding compartment (23) inside which at least a relative electric coil (24) is housed, and a support (18), able to cooperate with a side of said rotor (13) and on which a plurality of permanent magnets (19) are assembled, disposed in use facing said electric coils (24), **characterized in that** said rotor (13) is defined by one or more modular elements (14), each of which comprises two external or end teeth (21) and one or more intermediate teeth (22), and **in that** each of said external teeth (21) has a thickness (s') substantially equal to about half the thickness (s) of each of said intermediate teeth (22), so that, when two external teeth (21), belonging to two respective modular elements (14), are put adjacent, the resulting tooth has a thickness substantially equal to the thickness (s) of each of said intermediate teeth (22).

2. Linear motor as in claim 1, wherein each modular element (14), in correspondence with said external teeth (21), has two lead walls (27), substantially parallel with respect to each other, **characterized in that** said rotor (13) comprises one or more modular elements (14) disposed with the respective lead walls (27) in contact with each other.

3. Linear motor as in claim 1 or 2, wherein each modular element (14) has two lead walls (27) substantially parallel with respect to each other in correspondence with said external teeth (21), and two lateral walls (28) substantially perpendicular to said lead walls (27), **characterized in that** said rotor (13) comprises one or more modular elements (14) disposed with the respective lateral walls (28) in contact with each other.

4. Linear motor as in claim 1, 2 or 3, **characterized in that** each compartment (23) of said plurality of compartments is defined by two walls (30) substantially diverging with respect to each other towards said support (18).

5. Linear motor as in claim 4, **characterized in that** said two walls (30) defining one of said compartments (23) diverge by an angle (α) comprised between about 0.1° and about 4°.

6. Linear motor as in claim 5, **characterized in that** said angle (α) is comprised between about 0.5° and about 1.5°.

7. Linear motor as in any claim hereinbefore, **characterized in that** each of said external teeth (21) has a height (h') less than the height (h) of each of said intermediate teeth (22), and **in that** the height (h') of said external teeth (21) is comprised at least between about 85% and about 95% of the height (h) of said intermediate teeth (22).

8. Linear motor as in any claim hereinbefore, **characterized in that** each modular element (14) comprises a plurality of laminations (29) disposed one adjacent to the other and attached by means of a weld (34).

9. Linear motor as in any claim hereinbefore, **characterized in that** the ratio between the width (L) of a compartment (23) and the tooth pitch is equal to about 0.57, where the tooth pitch is defined by the sum of the width (L) of a compartment (23) and by the thickness (s) of the adjacent intermediate tooth (22).
